# EUROPÄISCHE PATENTANMELDUNG

(11) **EP 4 822 620 A1**
(43) Veröffentlichungstag der Anmeldung: **14.10.2026**
(21) Anmeldenummer: 25168965.9
(22) Anmeldetag: 07.04.2025
(51) Int. Cl.: G06Q 10/08

(54) **COMPUTERIMPLEMENTIERTES VERFAHREN ZUM BESTIMMEN EINER FÖRDERFÄHIGKEIT EINES STÜCKGUTS UND HANDHABUNGSVORRICHTUNG ZUM BESTIMMEN DER FÖRDERFÄHIGKEIT**

(71) Anmelder: Körber Supply Chain Logistics GmbH, 78467 Konstanz (DE)
(72) Erfinder: Fischer, Marco, 78467 Konstanz (DE); Schall, Martin, 78467 Konstanz (DE)
(74) Vertreter: Müller Schupfner & Partner Patent- und Rechtsanwaltspartnerschaft mbB (Muc)

(57) **Zusammenfassung**

Die vorliegenden Offenbarung zeigt ein computerimplementiertes Verfahren (V) zum Bestimmen einer Förderfähigkeit eines Stückguts (2), umfassend die Schritte Erlangen oder Erfassen einer Bildinformation (S1) eines Stückguts (2) während es von einer Handhabungsvorrichtung (1) gehandhabt wird; Bestimmen einer Stückgutinformation (S2) auf Basis der Bildinformation (20); und Bestimmen eines Risikowerts (S3) auf Basis der Stückgutinformation (22), wobei der Risikowert (24) indikativ für die Förderfähigkeit des Stückguts (2) ist. Ferner ist ein Computerprogramm und eine Handhabungsvorrichtung (1) zum Bestimmen der Förderfähigkeit des Stückguts (1) offenbart.

## Beschreibung

Die vorliegende Offenbarung betrifft ein computerimplementiertes Verfahren zum Bestimmen einer Förderfähigkeit eines Stückguts und eine Handhabungsvorrichtung zum Bestimmen der Förderfähigkeit.

An Förderstrecken eines Logistik-Netzwerks mit singuliertem Paketstrom werden die darauf geförderten Stückgüter, wie Pakete oder Tüten, in bekannter Praxis an diskreten Registrierungspunkten erfasst, um Informationen über die Stückgüter zu erlangen. Im Betrieb muss ein solches Logistik-Netzwerk in sehr kurzer Zeit eine große Anzahl an Stückgüter abfertigen. Dabei werden beispielsweise Lichtschranken zur Erfassung der Stückgüter eingesetzt. Es kommt jedoch in der Praxis vor, dass gerade diese Lichtschranken durch Verschmutzungen oder andere Einflüsse beeinträchtigt sind, wodurch es in der Konsequenz zu Abweichungen zwischen erfassten Informationen und zu erwartenden Informationen der Stückgüter kommen kann. Dabei können die Ursachen dieser Abweichungen oder Fehler nicht rein aus den Lichtschrankeninformationen hervorgehen. Darüber hinaus können Lichtschranken auch keine kontinuierliche und zentimetergenaue Positionsbestimmung eines individuellen Stückguts auf der Förderstrecke in Echtzeit bereitstellen. Ferner kommt es in der Praxis auch vor, dass potentiell blockierende oder nicht förderfähige Stückgüter nicht automatisch erkannt werden und somit auf die Förderstrecke gelangen, wo es zu einem Stau oder zu einer Überlagerung der Stückgüter kommen kann. Aus diesen Gründen werden derzeit einzelne nicht-förderfähige Stückgüter in Augenschein genommen, manuell herausgenommen und individuell transportiert. Eine automatische Handhabungsempfehlung für ein jedes zu transportierende Stückgut ist gerade deshalb nicht möglich, da die Rechenleistung der derzeitig eingesetzten speicherprogrammierbaren Steuerungen der Fördereinheiten nicht ausreichend oder deren Schnittstellen nicht flexibel sind. Somit sind die lediglich diskreten Zustandsinformationen der Lichtschranken nicht ausreichend, um eine individuelle Trackinghistorie eines jeden Stückguts bereitzustellen und einen störungsfreien Betrieb der Förderstrecke zu gewährleisten.

Aufgrund der unterschiedlichen und individuellen Ausgestaltung verschiedener Logistik-Netzwerke sind allgemeine Regeln der Förderfähigkeit und Überwachung zudem schwer aufzustellen. Vielmehr basiert die manuelle Aussortierung nicht förderfähiger oder potentiell fehlerverursachender Stückgüter auf individuellen empirischen Kriterien, die auf keiner einheitlichen Vorgabe beruhen und nicht statistisch begründet sind. Zudem ist die Ermittlung dieser Kriterien in hoch komplexen Förderanlagen durch hohe operative Kosten begleitet, da beispielsweise ein zeitaufwändiges Vermessen von Stückgütern oder ein geschultes Augenmaß und damit lange Einarbeitungszeit der Mitarbeiter notwendig sind. Folglich kommt es vermehrt zu Fehlern bei der automatischen Abwicklung und Förderung von Stückgütern. Beispielsweise werden resultierende Transportfehler nicht erkannt, wodurch vermeidbare Fehlsortierungen auftreten. Es ergeben sich gesteigerte Re-Identifikationsprozesse einzelner Stückgüter und zum Teil manuelle Korrekturen von verursachten Trackingfehlern.

Somit ist es besonders nachteilig, dass neu in Betreib genommene Logistik-Netzwerke oftmals Schritt für Schritt durch Erfahrungen während des Betriebs optimiert werden müssen und dass ein effektiver Betrieb von der Erfahrung von Experten abhängig ist.

Es ist daher eine Aufgabe des Gegenstands der vorliegenden Offenbarung, ein Verfahren bereitzustellen, womit die Abhängigkeit von der Erfahrung der Betreiber von Logistik-Netzwerken für einen effizienten Betrieb reduziert wird. Darüber hinaus ist es wünschenswert, die Stabilität des Förderprozesses und die Effizienz zu steigern.

Diese Aufgabe wird mit einem computerimplementierten Verfahren mit den Merkmalen des Anspruchs 1, und mit einer Handhabungsvorrichtung mit den Merkmalen des Anspruchs 15 gelöst. Weitere Merkmale und Ausführungsformen ergeben sich aus den abhängigen Ansprüchen, der Beschreibung sowie aus den Figuren.

Gemäß einem Aspekt der vorliegenden Offenbarung wird ein computerimplementiertes Verfahren zum Bestimmen einer Förderfähigkeit eines Stückguts bereitgestellt. Das Verfahren umfasst optional: ein Erlangen oder Erfassen einer Bildinformation eines Stückguts während es von einer Handhabungsvorrichtung gehandhabt wird. Ferner kann das Verfahren umfassen: ein Bestimmen einer Stückgutinformation auf Basis der Bildinformation. Ferner kann das Verfahren umfassen: ein Bestimmen eines Risikowerts auf Basis der Stückgutinformation, wobei der Risikowert indikativ für die Förderfähigkeit des Stückguts ist.

Gegenüber dem bisherigen Vorgehen, kann bei dem Gegenstand der vorliegenden Offenbarung eine Handhabungsvorrichtung durch ein Vision-System überwacht werden. Die so erlangte Bildinformation kann dann mittels Algorithmen (optional KI-basiert) ausgewertet werden. Somit können Stückgüter über die gesamte überwachte Strecke getrackt und überwacht werden. Auffälligkeiten im Transport von Stückgütern können somit aus den Positionsdaten identifiziert werden. Auffälligkeiten können relative Abstände zwischen Stückgütern sein, die sich verschieben. Ferner kann somit eine Bildung von Doubles (d.h. aufeinanderliegende Stückgüter) erkannt werden. Ferner kann eine Auffälligkeit sein, dass Stückgüter an der Handhabungsvorrichtung hängen bleibt, Stückgüter von anderen Stückgütern überholt werden, sich Staus bilden, sich Stückgüter verklemmten, Stückgüter in Kurven eine seitliche Beschleunigung erfahren (wenn beispielsweise eine Haftung zwischen Fördervorrichtung und Stückgut nicht ausreicht, Stückgut folgt nicht strikt der Fördertechnik, sondern zeigt abweichende Bewegungen, Stückgüter fallen von Förderstrecke, Stückgüter zerfallen in Teilkomponenten, Stückgüter verhalten sich nicht vorhersehbar (relativ zu Schwarm/Durchschnitt der anderen Stückgütern), und/oder Stückgütern sind relativ zu der Handhabungsvorrichtung fehlplatziert (z.B. Fehlplatzierung auf einem Sorter. Ferner kann erfasst werden, dass sich Stückgüter verdrehen. Sind solche Anomalien erkannt worden, kann dies durch den Risikowert bewertet werden (d.h. wie wesentlich ist eine solche Auffälligkeit). Ferner kann der Risikowert auch anhand eines oder mehrerer Bilder eines Stückguts bestimmt werden. So kann ein Bild oder mehrere Bilder eines Stückguts aufgenommen werden und einem Klassifikator zugeführt werden. Der Klassifikator kann dann Eigenschaften aus dem zumindest einen Bild ableiten. Anhand der Eigenschaften kann dann der Risikowert bestimmt werden. So können beispielsweise Stückgüter, die von vorneherein eine erhöhte Wahrscheinlichkeit haben bei einer Handhabung Probleme hervorzurufen, frühzeitig identifiziert werden. Zusammengefasst kann der Risikowert basierend auf dem Stückgut (z.B. Bildinformationen des Stückguts) und/oder einem Verhalten des Stückguts während einer Handhabung bestimmt werden. Anhand des so bestimmten Risikowerts, können dann als problematisch eingestufte Stückgütern bei nächster Möglichkeit aus einer automatisierten Handhabungskette ausgeschleust werden.

Alle Informationen zu Stückgütern inklusive Bildinformation und Tracking können (ggf. komprimiert) in einer Datenbank eingetragen werden. Falls ein Problem zweifelsfrei auf ein einzelnes Stückgut zurückgeführt werden kann, kann dies vermerkt werden. Gegebenenfalls auch für Kombinationen von Stückgütern oder Relationen (z.B. Tüte gefolgt von Tüte). Aus diesen Informationen kann für jedes neue Stückgut ein Risikowert berechnet werden, ob es zu Störungen im Transport führen wird oder nicht. Durch Festlegung eines akzeptablen Gesamtrisikos, kann ein Arbeitspunkt gewählt werden, welcher letztendlich festlegt, welche Stückgüter sicherheitshalber ausgeschleust oder abgewiesen werden. Diese Konfiguration des Arbeitspunktes kann pro Handhabungsvorrichtung individuell definiert sein und z.B. verschiedene Fehlertypen unterscheiden.

Das Verfahren kann von einer Recheneinheit eines Überwachungssystems ausgeführt werden. Die Recheneinheit kann dazu ausgestaltet sein, die Verfahrensschritte des Verfahrens auszuführen. Bei der Recheneinheit kann es sich um eine computerähnliche Einheit mit einer Vielzahl von Schnittstellen handeln. Ferner kann die Recheneinheit dazu ausgestaltet sein, benötigte Informationen zu empfangen, zu verarbeiten und Befehle auszugeben. Das Verfahren kann auf oder im Zusammenhang mit einem Logistik-Netzwerk sowie mit einer einzelnen oder mehreren Handhabungsvorrichtungen des Logistik-Netzwerks ausgeführt werden. Das Überwachungssystem kann eine oder mehrere Handhabungsvorrichtungen überwachen oder Teil des einen oder mehrerer Handhabungsvorrichtungen sein. Mitunter ist das Verfahren insbesondere während der Abfertigung von Stückgütern durch das Logistik-Netzwerk oder zumindest einer der Handhabungsvorrichtungen ausführbar. Die Handhabungsvorrichtung kann beispielsweise eine Fördereinheit, wie ein Förderband, oder ein Manipulator, wie ein Greifer, sein. Die Handhabungsvorrichtung kann dazu ausgestaltet sein, ein Stückgut physisch im Raum zu verlagern. Bei dem Stückgut kann es sich um ein Poststück handeln, wobei beispielsweise Kartons, Briefe, Packtasche, Transportrollen, Polybags, Smalls und dergleichen. Damit können die Stückgüter eine unregelmäßige Außenform aufweisen. Ferner kann ein Schwerpunkt der Stückgüter von einem geometrischen Schwerpunkt der Stückgüter abweichen. Bei der Handhabung des Stückguts durch die Handhabungsvorrichtung ist es insbesondere beabsichtigt, das Stückgut von einer Ausgangsposition hin zu einer Zielposition über einen Zeitraum hinweg zu verlagern. Dabei kann das Stückgut während der Handhabung eine Vielzahl von Zwischenpositionen, Zwischenorientierungen, Zwischenzustände oder dergleichen annehmen. Während des Erlangens oder Erfassens können die faktisch auftretenden Zwischenpositionen, Zwischenorientierungen oder Zwischenzustände als Information verarbeitet werden. Mit anderen Worten kann ein digital verarbeitbares Signal für ein Stückgut erzeugt werden, welches gehandhabt wird. Das kann eine digitale Informationsbereitstellung über eine Position und/oder Zustand des Stückguts liefern. Das Erlangen oder Erfassen wird Optional durch optische Erfassungseinrichtungen realisiert. Beispielsweise kann eine oder mehrere Kameras, vorgesehen sein. Das Erfassen kann hierbei bedeuten, dass die Bildinformation während des Ausführens des Verfahrens erfasst werden. Beispielsweise kann ein Vision-System (d.h. ein kamerabasiertes Erfassungssystem) vorgesehen sein, welches eine Handhabungsvorrichtung überwacht. Das Erlangen kann demgegenüber einen Zustand bezeichnen, bei dem das Verfahren nicht gleichzeitig mit der Erfassung ausgeführt wird. Beispielsweise kann die Bildinformation aus einer Datenbank erlangt werden. Somit kann eine Förderfähigkeit auch nachträglich bestimmt werden. Dadurch kann ein lernendes System mit Daten aus der Vergangenheit trainiert werden. Die Erfassungseinrichtung weist insbesondere Kommunikationsschnittstellen auf, um Informationen mit der Recheneinheit auszutauschen. Eine Bildinformation kann somit durch die Erfassungsvorrichtung erlangt oder erfasst werden. Die Bildinformation kann optische Merkmale eines Stückguts umfassen. Die Bildinformation kann eine diskrete Aufnahme des Stückguts umfassen. Diskret kann in diesem Zusammenhang bedeuten, dass die Bildinformation zu einem Zeitpunkt oder zu einer Vielzahl unterschiedlicher und voneinander beabstandeter Zeitpunkte erlangt oder erfasst wird. Es können eine Vielzahl von Bildinformationen bereitgestellt werden. Der Begriff Bildinformation ist somit auch als eine Mehrzahl von Bildinformationen verständlich. Ausgehend von der Bildinformation kann die Stückgutinformation durch das Verfahren bestimmt werden. Das Bestimmten der Stückgutinformation kann durch die Recheneinheit ausführbar sein. Mit anderen Worten kann die Bildinformation verarbeitet und als Stückgutinformation interpretiert werden. Die Stückgutinformation kann Eigenschaften eines Stückguts umfassen. Ferner kann die Stückgutinformation eine Einflussgröße, insbesondere zur Bestimmung eines Risikowerts sein. Unter Bestimmen kann ein Ableiten oder regelbasiertes Überführen verstanden werden. Mit anderen Worten ist damit insbesondere eine wiederkehrende Gesetzmäßigkeit zu verstehen. Die Stückgutinformation kann individuell für ein Stückgut bestimmt werden. Es können eine Vielzahl von Stückgutinformationen bereitgestellt werden. Denkbar ist auch, dass das Stückgut eine Vielzahl unterschiedlicher Stückgutinformationen umfasst. Das kann den Effekt liefern, dass ein Stückgut möglichst genau charakterisiert werden kann. Eine erste Stückgutinformation kann sich von einer zweiten Stückgutinformation eines Stückguts unterscheiden. Beispielswese kann eine Position des Stückguts durch die erste Stückgutinformation wiedergegeben werden, wohingegen die zweite Stückgutinformation eine Orientierung des Stückguts wiedergibt. Dadurch kann eine besonders angepasste Informationserfassung bereitgestellt werden. Die Stückgutinformation kann in einem Datenspeicher abgelegt werden. Der Risikowert kann eine Interpretation der Stückgutinformation sein. Dabei kann der Risikowert basierend auf der Stückgutinformation eines ersten Stückguts und zumindest eines weiteren Stückguts bestimmt werden. Mit anderen Worten können eine Vielzahl von Einflussgrößen zur Bestimmung des Risikowerts herangezogen werden. Dadurch kann die Förderfähigkeit des Stückguts entsprechend der Situation, die bei dem Stückgut vorliegt, bestimmt werden. Das heißt, dass ein Förderpfad des Stückguts von dem zugeordneten Risikowert abhängig sein kann. Zusätzlich können Beziehungen zwischen einer Vielzahl unterschiedlicher Stückgüter abgebildet werden. Die Förderfähigkeit kann ein Maß für eine Wahrscheinlichkeit dafür sein, ob das Stückgut zu einem Fehler und/oder einer Beeinträchtigung der Handhabungsvorrichtung während der Handhabung führen kann. Anders ausgedrückt kann die Förderfähigkeit auch ein Maß für die Transportfähigkeit des Stückguts sein. Der Risikowert des Stückguts kann von Stückgutinformationen, die in Verbindung mit einem anderen Stückgut stehen, abhängen. Ferner kann der Risikowert auch eine Entscheidungsgröße dafür sein, ob, bei Erreichen oder Überschreiten eines festgelegten Grenzwertes, das Stückgut aus der Handhabungsvorrichtung ausgeschleust wird. Dadurch kann ein Stückgut, welches mit hoher Wahrscheinlichkeit zu einem Fehler während des Handhabungsprozesses führen wird, ausgeschleust werden. Die Bildinformation kann beispielsweise aus einer Vielzahl von Bildern (z.B. ein Bilddatenstrom) oder aus einzelnen Bildern erlangt werden. Die Bildinformation kann beispielsweise eine Interpretation von Bilddaten sein. So kann die Bildinformation eine vereinfachte Darstellung des überwachten Bereichs sein. Dadurch kann die Datenmenge reduziert sein. Das Erfassen oder Erlangen der Bildinformation kann eine Klassifizierung sein. Mit anderen Worten können die Ausgangsdaten einem Klassifikator zugeführt werden, der dann die Bildinformation als Ausgabe bereitstellt. Die Bildinformation kann erlangt werden, solange das Stückgut von der Handhabungsvorrichtung gehandhabt wird. Beispielsweise kann die Handhabungsvorrichtung ein Förderband sein, das ein Stückgut bewegt, also handhabt. Ferner kann die Handhabungsvorrichtung ein Roboter sein, der ein Stückgut greift und verlagert. Die Stückgutinformation kann eine Eigenschaft der Stückguts sein. Beispielsweise kann die Stückguteigenschaft eine Dimensionierung des Stückguts sein. Ferner ist denkbar, dass die Stückguteigenschaften eine Oberflächenbeschaffenheit, einen Schwerpunkt, ein Gewicht, ein Material und dergleichen des Stückguts umfasst. Die Stückgutinformation kann mittels Klassifikator bestimmt werden. Somit kann die Bildinformation mit einem ersten Klassifikator und die Stückgutinformation mit einem zweiten Klassifikator bestimmt werden, wobei sich der erste Klassifikator von dem zweiten Klassifikator unterscheidet. Bei der Bestimmung der Stückgutinformation kann die Bildinformation einem Klassifikator (z.B. dem zweiten Klassifikator) zugeführt werden. Der Klassifikator kann dann basierend auf der Bildinformation, Stückgutinformationen (eine oder mehrere) ausgeben. Der Risikowert kann beispielsweise indikativ dafür sein, wie wahrscheinlich es ist, dass es bei einer weiteren Handhabung (beispielsweise bei einer folgenden Handhabung) zu Problemen mit dem jeweiligen Stückgut kommt. Es ist denkbar, dass der Risikowert ein Prozentwert ist, der indikativ für die Förderfähigkeit des Stückguts ist (d.h. angibt mit welcher Wahrscheinlichkeit das Stückgut zu einem Problem führen wird).

Somit kann ein autarkes Verfahren zum Bestimmen einer Förderfähigkeit bereitgestellt werden, das keine Interfaces zu Fördertechnik und Lichtschranken benötigt. Ferner kann ein Auftreten von Handhabungsproblemen reduziert werden, indem nicht-förderfähiger Objekte identifiziert werden können. Ferner kann eine manuelle Induction von Objekten schneller erfolgen, das ein Regelwerk einfach ist oder komplett von der Steuerung überprüft werden kann. Somit können individuelle Bewertungen von Mitarbeitern von automatischen Systemen ersetzt werden, was zu einer objektiven Bewertung führt. Zudem können Stückgüter identifiziert werden, die regelmäßig zu Problemen führen. Ferner besteht die Möglichkeit ein Anlage (d.h. eine Handhabungsvorrichtung) zu optimieren und Fehler zu identifizieren. Damit können Leistungs- und Fehlerraten für jede Komponente (auch Fremdkomponenten) mit hoher statistischer Genauigkeit bei unterschiedlichen Betriebspunkten (Durchsatz, Materialspektrum) ermöglicht sein. Ferner kann eine Lastbalancierung durch einen Eingriff in die Handhabungsvorrichtung ermöglicht sein, um Fehlerraten zu reduzieren.

Optional kann die Bildinformation ein Bildpaket umfassen, das insbesondere aus einzelnen Bildern besteht. Unter einem Bildpaket kann ein Bilddatenstrom verstanden werden. Ein Bilddatenstrom ist insbesondere auch als Video zu verstehen. Mit anderen Worten können Bilder zeitlich sequentiell erlangt oder erfasst werden.

Durch das Bildpaket kann eine näherungsweise kontinuierliche Erlangung oder Erfassung der Bildinformation bereitgestellt werden. Der Begriff näherungsweise kann in dieser Formulierung durch die Anzahl von Bildern pro Zeiteinheit ausgelegt werden, um eine flüssige Bewegung darstellen zu können. Gemäß dieses Merkmals können die Bilder in einer Zeitfolge hintereinandergelegt interpretiert werden. Dadurch ergibt sich gegenüber aus dem Stand der Technik bekannten und verwendeten Lichtschranken der Effekt, dass beispielsweise die Auflösung einer Positionsbestimmung, als Stückgutinformation, deutlich gesteigert werden kann. Somit kann eine digitale Verfolgung oder ein sogenanntes Tracking des Stückguts mit hoher Realitätsnähe bereitgestellt werden.

Optional kann das Erlangen oder Erfassen ein a-priori Stitching von einzelnen Bilder umfassen, um die Bildinformationen zu erhalten. Ein a-priori Stitching kann sich auf Informationen oder Annahmen beziehen, die vor der eigentlichen Analyse oder dem Experiment bereits bekannt sind. Beim Stitching (Zusammenfügen von Bildern) kann es sich um den Prozess handeln, bei dem mehrere Bilder zu einem größeren Panorama oder einem einzigen Bild zu kombiniert werden. Somit können Bilddaten, die von mehreren Kameras oder Sensoreinheiten (d.h. Vision-System) kommen, zu einem Gesamtbilddatenstrom zusammengefügt werden. Ferner kann bei dem a-priori Stitching bereits vorherige Informationen über die Bilder oder die Szene berücksichtigt werden, um den Stitching-Prozess zu verbessern. Diese Informationen können sein: Kamerapositionen oder Kamerabewegungen, die im Voraus bekannt sind Geometrische Annahmen oder Bewegungsmodelle, die die Transformationen zwischen den Bildern vorab definieren Farbkorrekturen oder Belichtungsanpassungen, die schon vorher festgelegt werden, um Konsistenz zwischen den Bildern zu gewährleisten. Die Nutzung solcher a-priori Informationen kann den Stitching-Prozess optimieren und die Genauigkeit der Bildzusammenführung erhöhen, insbesondere wenn es sich um komplexe Szenen oder große Bildmengen handelt. Sie hilft dabei, Fehler zu minimieren, die durch unscharfe Übergänge oder Verzerrungen zwischen den einzelnen Bildern entstehen könnten. Mit anderen Worten kann eine Vielzahl von Bildern zu einem Gesamtbild zusammengefasst werden, ohne, dass es zu einer Interpretation der Bildinformationen kommen muss. Wiederum anders ausgedrückt können Bilder zeitlich parallel erlangt oder erfasst werden. Dies kann den Effekt liefern, dass Bildinformationen unterschiedlicher Erfassungseinrichtungen zu einem vergleichsweise großen Gesamtbild zusammengefasst werden können. Gerade dadurch kann das Bildformat einer erfassten Bildinformation derart angepasst werden, dass ein größerer Abschnitt abgebildet werden kann, als es durch das Bildformat lediglich einer einzigen Erfassungsvorrichtung möglich wäre. Weiterhin kann dadurch beispielsweise die gesamte Erstreckung einer Handhabungsvorrichtung oder einer Fördereinheit in einer Bilddatei oder einer Bildinformation darstellbar sein. Dadurch kann ein echtzeitfähiges Abbild der Handhabungsvorrichtung oder der Fördereinheit bereitgestellt werden. Ferner kann der Schritt des A-Priori-Stitching eine vorgelagerte Rektifizierung der einzelnen Bilder der jeweiligen Erfassungsvorrichtungen aufweisen. Damit wird beabsichtigt, eine perspektivische Verzerrung durch unterschiedliche Blickwinkel auszugleichen, sodass ein verzerrungsfreies und maßstabsgetreues Gesamtbild bereitstellbar ist.

Optional kann die Bildinformation indikativ für zumindest zwei unterschiedlichen Zeitpunkte sein. Genauer gesagt kann das bedeuten, dass eine Bildinformation zu einem Zeitpunkt t₀ aufgenommen wird, wohingegen eine weitere Bildinformation zu einem zweiten Zeitpunkt t₁ aufgenommen werden kann. Somit kann ein diskreter Bewegungsprozess durch eine Vielzahl aufgenommener Bildinformationen darstellbar sein. Mit anderen Worten kann eine Änderung der Position und/oder Orientierung des Stückguts überwacht werden. Dies bedeutet, dass die Bildinformationen des Stückguts nicht nur einmalig, sondern mehrmals während des Handhabungsprozesses erfasst werden. Diese wiederholte Erfassung ermöglicht eine dynamische Analyse des Stückguts über einen bestimmten Zeitraum hinweg, was zu einer präziseren Bestimmung der Förderfähigkeit führt. Die Bildinformationen können beispielsweise zu Beginn und am Ende eines bestimmten Handhabungsschritts oder in regelmäßigen Abständen während des gesamten Handhabungsprozesses erfasst werden. Der Effekt dieser Herangehensweise liegt in der Möglichkeit, Veränderungen im Zustand oder in der Position des Stückguts zu erkennen, die auf potenzielle Probleme bei der Förderung hinweisen könnten. Durch die Analyse von Bildinformationen zu mehreren Zeitpunkten kann das System beispielsweise erkennen, ob ein Objekt seine Form verändert hat, ob es sich in einer unerwarteten Weise bewegt oder ob es sich in einer Position befindet, die das Risiko von Störungen erhöht. Ferner kann eine Integrität des Stückguts überwacht werden (d.h. ob sich einzelne Teile des Stückguts lösen oder verändern). Dies kann bewirkt, dass ein Tracking des Stückguts mit reduziertem Datenvolumen und reduzierter Rechenleistung, bereitgestellt werden kann.

Optional kann die Bildinformation kontinuierlich erlangt oder erfasst werden. Damit kann erreicht werden, dass die Bildinformation als ein Video oder Video-Stream erfasst oder erlangt werden kann. Mit anderen Worten kann ein Zeitabstand zwischen einem ersten aufgenommenen Bild und einem zweiten aufgenommenen Bild weniger als 0,1 % einer Sekunde betragen. Anders gesagt, können mehr als 5 Bilder pro Sekunde aufgenommen werden. Dadurch kann der Datenverkehr reduziert während ein ausreichend genaues Tracking bereitgestellt werden kann. Optional können mehr als 20 Bilder pro Sekunde aufgenommen werden. Somit kann eine möglichst flüssige Bewegung des Stückguts dargestellt werden. Dies bewirkt, dass eine möglichst hohe Auflösung der Positionsbestimmung des Stückguts ermöglicht werden kann. Unter kontinuierlich erlangten Bildinformationen kann verstanden werden, dass Bilder in einem konstanten zeitlichen Abstand aufgenommen werden. Alternativ kann ein Aufnehmen von weniger als 5 Bilder pro Sekunde nicht mehr als ein kontinuierliches Aufnehmen von Bildern verstanden werden.

Optional kann das Verfahren ferner umfassen, eine Identifikation eines Stückguts auf Basis der Bildinformation , wobei die Bestimmung des Risikowerts zusätzlich basierend auf der Identifikation ausgeführt werden kann. Diese Identifikation ermöglicht eine genauere und spezifischere Bestimmung des Risikowerts, indem sie zusätzliche Daten zur Verfügung stellt, die über die bloße Bildinformation hinausgehen. Die Identifikation des Stückguts kann durch den Einsatz von Algorithmen zur Mustererkennung oder durch den Abgleich mit einer Datenbank von bekannten Stückgütern erfolgen. Diese zusätzlichen Informationen erlauben es, das Stückgut nicht nur allgemein zu analysieren, sondern es spezifisch zu identifizieren und dessen individuelle Eigenschaften und Historie in die Risikobewertung einzubeziehen. Dies ist besonders bei komplexen Logistikumgebungen nützlich, in denen eine Vielzahl unterschiedlicher Stückgütern mit unterschiedlichen Förderfähigkeiten und potenziellen Risiken gehandhabt werden. Der Effekt einer solchen Identifikation liegt in der erhöhten Präzision und Zuverlässigkeit der Risikobewertung, da spezifische Risiken, die mit bestimmten Stückguttypen verbunden sind, berücksichtigt werden können. Dies führt zu einer effizienteren und sichereren Handhabung von Stückgütern, da problematische Objekte frühzeitig erkannt und entsprechende Maßnahmen ergriffen werden können. Darüber hinaus kann die Identifikation des Stückguts auch dazu beitragen, historische Daten zu nutzen, um Muster und Trends in der Förderfähigkeit zu erkennen, was wiederum die Optimierung von Logistikprozessen unterstützt. Die Integration der Identifikation in den Prozess bietet somit eine erweiterte Grundlage für die Entscheidungsfindung und trägt zur Reduzierung von Transport- und Sortierstörungen bei. Diese Methode ist besonders nützlich in automatisierten Systemen, wo die Fähigkeit, Stückgüter schnell und genau zu identifizieren, entscheidend für den reibungslosen Betrieb ist.

Optional kann die Stückgutinformation kontinuierlich erlangt oder erfasst werden. Dies bedeutet, dass die Bildinformationen des Stückguts in Echtzeit und ohne Unterbrechung während des gesamten Handhabungsprozesses durch die Handhabungsvorrichtung gesammelt werden. Kontinuierliche Erfassung der Stückgutinformation bietet mehrere Effekte. Erstens ermöglicht sie eine lückenlose Überwachung und Nachverfolgung des Stückguts, was die Genauigkeit und Zuverlässigkeit der Förderfähigkeitsbestimmung erhöht. Durch die kontinuierliche Erfassung können auch dynamische Veränderungen im Zustand oder in der Position des Stückguts erkannt werden, die bei einer punktuellen Erfassung möglicherweise übersehen würden. Mit anderen Worten kann die Stückgutinformation nicht nur an festgelegten Zeitpunkten sondern zu jedem Zeitpunkt erfasst oder erlangt werden. Dabei kann eine Frequenz der Bestimmung der Stückgutinformation von einer Frequenz der Erlangung oder Erfassung von Bildinformationen abhängig sein. Dies kann den Effekt liefern, dass die Genauigkeit der Positionsbestimmung durch eine erhöhte Frequenz bei der Erlangung oder Erfassung der Bildinformationen gesteigert werden könnte. Weiterhin kann Stückgutinformation ein dynamischer Wert sein. Mit anderen Worten kann die Stückgutinformation auch veränderlich sein. Das heißt, dass eine Stückgutinformation durch ein Update, beispielsweise durch eine neue Bildinformation, einen neuen veränderlichen Wert annehmen kann. Somit kann ein Verfahren bereitgestellt werden, dass sich fortlaufend weiterentwickelt oder lernend sein kann.

Optional können die Stückgutinformationen folgendes umfassen: einen Zeitstempel und/oder Positionsdaten des Stückguts und/oder eine Größe des Stückguts und/oder ein Gewicht des Stückguts und/oder eine Stückgutklasse und/oder einen Abstand des Stückguts zu einem nächsten Stückgut und/oder eine Veränderung der Handhabungsreihenfolge des Stückguts und/oder eine Veränderung von Positionsdaten des Stückguts. Ferner kann die Stückgutinformation auch eine Vielzahl von Stückgutinformationen umfassen, wobei eine Stückgutinformation durch einen tabellarischen eingetragenen Wert in einer Tabelle mit einer Vielzahl von Stückgutinformationen dargestellt sein kann. Mit anderen Worten kann eine Stückgutinformation auch durch einen mehrdimensionalen Vektor dargestellt werden, wobei jede Dimension des mehrdimensionalen Vektors indikativ für eine der oben genannten Stückgutinformationen sein kann. Denkbar ist auch, dass die Stückgutinformation mehr als nur eine Dimension des mehrdimensionalen Vektors umfasst. Beispielsweise können die Positionsdaten zumindest drei, insbesondere sechs Dimensionen des mehrdimensionalen Vektors umfassen. Ein Vektor kann eine geordnete Liste von Werten sein, die verschiedene Eigenschaften eines Objekts darstellen können. In diesem Fall beschreibt der Vektor die Eigenschaften eines Stückguts (z. B. seine Position oder Ausrichtung im Raum). Positionsdaten können dabei drei oder mehr Dimensionen (z.B. sechs Dimensionen) aufweisen. Wenn man von drei Dimensionen spricht, können damit typischerweise die kartesischen Koordinaten gemeint sein. Damit kann in einem Koordinatensystem mit x, y, z die Position des Stückguts im dreidimensionalen Raum beschrieben sein. Wenn man von mehr Dimensionen spricht, können zusätzlich die Orientierungsdaten berücksichtigt werden wie beispielsweise Roll, Pitch, Yaw. Roll, Pitch, Yaw können Drehwinkel um die drei Achsen beschreiben und damit die Rotation eines Stückguts definieren. Dadurch kann nicht nur die Position, sondern auch die Ausrichtung eines Stückguts im Raum erfasst werden. Neben Positions- und Orientierungsdaten könnten weitere Dimensionen in den Vektor aufgenommen werden, z. B.: Geschwindigkeit, Gewicht, Dimension, Oberflächenbeschaffenheit und/oder andere Zustandsinformationen des betrachteten Stückguts. Diese Stückgutinformationen können einen Zeitstempel umfassen, der es ermöglicht, den genauen Zeitpunkt der Erfassung der Bildinformation zu dokumentieren, was für die Nachverfolgung und Analyse von Transportfehlern entscheidend sein kann. Die Positionsdaten des Stückguts können präzise Informationen über den Standort des Stückguts auf der Förderstrecke liefern, was die Möglichkeit bietet, Bewegungsmuster zu analysieren und potenzielle Störungen zu identifizieren. Die Größe und das Gewicht des Stückguts sind wesentliche physische Parameter, die zur Bestimmung der Förderfähigkeit beitragen können, da sie Einfluss auf die Handhabung und den Transport des Stückguts haben können. Eine Stückgutklasse ermöglicht die Kategorisierung des Stückguts basierend auf vordefinierten Kriterien, was die Anwendung spezifischer Regelwerke zur Bestimmung der Förderfähigkeit erleichtert. Der Abstand des Stückguts zu einem nächsten Stückgut ist ein kritischer Faktor zur Vermeidung von Kollisionen und Staus auf der Förderstrecke. Eine Veränderung der Handhabungsreihenfolge des Stückguts kann auf Unregelmäßigkeiten im Transportprozess hinweisen, die eine Anpassung der Förderstrategie erfordern. Schließlich bieten Veränderungen von Positionsdaten des Stückguts wertvolle Einblicke in die Dynamik des Stückguttransports, indem sie Abweichungen von der erwarteten Förderbewegung aufzeigen.

Ferner kann die Stückgutinformation durch ein Maschinen-Vision-Verfahren bestimmt werden. Durch das Maschinen-Vision-Verfahren können Merkmale, insbesondere die Stückgutinformation, aus einer Bilddatei, wie die Bildinformation, bestimmt werden. Dadurch kann ein automatisches Bestimmen der Stückgutinformation bereitgestellt werden. Machine-Vision, auch bekannt als maschinelles Sehen, bezieht sich auf Technologien und Methoden, die verwendet werden, um visuelle Informationen zu erfassen und zu verarbeiten, ähnlich wie das menschliche Sehen. In diesem Kontext wird ein Machine-Vision-Verfahren eingesetzt, um die Bildinformation eines Stückguts zu analysieren und daraus relevante Stückgutinformationen abzuleiten. Dies kann beispielsweise die Größe, Form, Farbe, Textur oder andere visuelle Merkmale des Stückguts umfassen. Darüber hinaus besteht auch die Möglichkeit, dass ein Maschinen-Vision-Verfahren selbstlernend ist, sodass eine automatische Bestimmung der Stückgutinformationen angepasst, insbesondere verbessert, werden kann. Folglich kann das Bestimmen des Risikowerts, welcher indikativ für die Förderfähigkeit des Stückguts ist, gesteigert werden. Optional kann die Stückgutinformation von Positionsdaten abhängen. Dadurch ist insbesondere gemeint, dass die Stückgutinformation auf Basis einer weiteren Stückgutinformation bestimmt werden kann. Beispielsweise kann der Abstand des Stückguts zu einem nächsten Stückgut dadurch bestimmt werden, dass die Positionsdaten des einen Stückguts mit den Positionsdaten des anderen Stückguts verglichen werden. Somit können relative Beziehungen zwischen einem Stückgut und einem anderen weiteren Stückgut bestimmt werden. Insbesondere kann dadurch die Ausbildung von Doubles aufgeklärt werden.

Optional könne die Stückgutinformation zusätzlich auf Basis einer Sensorinformation bestimmt werden. Diese Sensorinformationen können aus verschiedenen Quellen stammen, wie z.B. Gewichtssensoren, Bewegungssensoren oder anderen physischen Detektoren, die in der Handhabungsvorrichtung oder entlang der Förderstrecke integriert sind. Ferner kann ein Barcodeleser als Sensors vorgesehen sein, der durch scannen eines Barcodes oder QR-Code oder eines sonstigen Identifikationsmittels das Stückgut identifizieren kann. Basierend auf dieser Identifikation können dann Stückgutinformation des Stückguts erlangt werden. Insbesondere kann auf Basis der Identifikation die Stückgutinformationen aus eine Datenbank abgerufen werden. Ferner ist es denkbar, dass erfasste Stückgutinformationen zu einer erfassten Identifikation in einer Datenbank abgelegt werden. Somit kann bei einer zukünftigen Handhabung des Stückguts, die Stückgutinformation aus der Datenbank abgerufen werden. Die Einbeziehung von Sensorinformationen bietet eine zusätzliche Dimension zur Analyse des Stückguts, die über die reine Bildinformation hinausgeht. Mit anderen Worten können Stückgutinformationen, wie beispielsweise das Gewicht des Stückguts, durch eine Waage als Sensoreinheit gemessen werden und diese Sensorinformation über die Recheneinheit dem Stückgut zugeordnet werden. Beispielsweise kann eine Sensorinformation durch eine Lichtschranke erfasst werden und der Recheneinheit zugeführt werden.

Dadurch kann eine redundante Bestimmung der Pose (Position und Orientierung) des Stückguts oder die Größe des Stückguts als Stückgutinformation abgeglichen werden. Weiterhin kann dadurch eine Kalibrierung der jeweiligen Stückgutinformation, die auf Basis einer Bildinformation bestimmt wird, erfolgen.

Optional können die Bildinformation und/oder die Stückgutinformation, insbesondere kontinuierlich, in einer Datenbank gespeichert und/oder mit dieser verknüpft werden. Mit anderen Worten können die Bildinformation und/oder die Stückgutinformation in der Datenbank, insbesondere durch die Recheneinheit, überführt und dort abgelegt werden. Die kontinuierliche Speicherung bedeutet, dass die Informationen in Echtzeit oder nahezu in Echtzeit aktualisiert werden, was eine dynamische und aktuelle Datenbasis schafft. Diese Datenbank fungiert als zentrales Repository, das es ermöglicht, historische Daten zu analysieren und Muster zu erkennen, die auf potenzielle Transportprobleme hinweisen könnten. Ein Effekt dieser Methode ist die verbesserte Nachverfolgbarkeit und Analyse von Stückgütern, da alle relevanten Informationen zentral gespeichert und leicht zugänglich sind. Dies erleichtert nicht nur die Überwachung und Verwaltung von Stückgütern, sondern unterstützt auch die Entscheidungsfindung, indem es ermöglicht, auf Basis umfassender Datenanalysen fundierte Entscheidungen zu treffen. Ein weiterer Effekt ist die Möglichkeit, die gespeicherten Daten zur Verbesserung der Algorithmen zu nutzen, die zur Bestimmung der Förderfähigkeit eingesetzt werden. Durch die Analyse der gespeicherten Bild- und Stückgutinformationen können die Algorithmen kontinuierlich optimiert werden, um präzisere Risikobewertungen zu ermöglichen. Darüber hinaus bietet die Verknüpfung der Informationen in der Datenbank die Möglichkeit, diese mit anderen Systemen oder Datenquellen zu integrieren, was die Interoperabilität und Flexibilität des gesamten Systems erhöht.

Optional kann das Verfahren einen weiteren Schritt umfassen, wobei eine Überwachung eines Fehlerzustandes während des Handhabens bereitgestellt wird, wobei im Falle eines aufgetretenen Fehlers, dieser Fehler der Stückgutinformation zugeordnet wird. Der Fehlerzustand kann jener Zustand der Handhabungsvorrichtung oder der Sensoreinheit sein, bei dem es zu einer zufälligen Abweichung von einem vorgedachten und/oder geplanten Transport von dem Stückgut oder mehrerer Stückgüter handelt. Mit anderen Worten können Fehler beispielsweise ein Stau von Stückgütern oder eine falsche Identifikation des Stückguts sein. Sofern das Verfahren, welches durch die Recheneinheit ausgeführt werden kann, ein Fehler feststellt, kann dieser Fehler mit demjenigen Stückgut verknüpft werden, welches den Fehler ausgelöst hat. Genauer gesagt erhält dieses Stückgut insbesondere eine jeweilige Stückgutinformation, die durch den Fehler oder einen potentiell auslösenden Fehler gekennzeichnet ist. Damit kann die Förderfähigkeit des jeweiligen Stückguts bestimmt werden.

Optional kann der Risikowert individuell für das Stückgut bestimmt werden. Mit anderen Worten kann einem jeden Stückgut ein eigener Risikowert zugeordnet werden. Somit kann die Förderfähigkeit eines jeden Stückguts durch dessen Risikowert bestimmt werden. Das kann den Effekt liefern, dass jedes Stückgut individuell gefördert oder ausgeschleust werden kann. In diesem Kontext bezieht sich die Überwachung eines Fehlerzustands auf die kontinuierliche Beobachtung und Erfassung von Anomalien oder Unregelmäßigkeiten, die während des Transports oder der Handhabung des Stückguts auftreten können. Diese Fehlerzustände können verschiedene Formen annehmen, wie etwa das Hängenbleiben eines Objekts, die Bildung von Staus, das Umkippen oder Verdrehen eines Objekts, sowie das Zerfallen eines Objekts in Teilkomponenten. Die Zuordnung des Fehlers zur Stückgutinformation bedeutet, dass spezifische Daten über das Stückgut, wie etwa seine Identität, Position und Bewegungsmuster, mit den erkannten Fehlern verknüpft werden. Dies ermöglicht eine präzise Rückverfolgung und Analyse der Ursachen von Transportfehlern. Die Integration dieses zusätzlichen Schritts bietet mehrere Effekte. Zum einen ermöglicht sie eine detaillierte und genaue Diagnose von Problemen, die während des Transports auftreten, was zu einer verbesserten Fehlerbehebung und Optimierung der Förderstrecke führt. Zum anderen trägt sie zur kontinuierlichen Verbesserung der Algorithmen bei, die zur Bestimmung der Förderfähigkeit verwendet werden, indem sie eine reichhaltige Datenbasis für maschinelles Lernen und statistische Analysen bereitstellt. Darüber hinaus kann die Zuordnung von Fehlern zu spezifischen Stückgütern dazu beitragen, wiederkehrende Probleme zu identifizieren und gezielte Maßnahmen zur Vermeidung zukünftiger Fehler zu entwickeln. Dies führt letztlich zu einer Reduktion von Transport- und Sortierstörungen, einer Erhöhung der Betriebseffizienz und einer Verringerung der operativen Kosten.

Optional kann der Risikowert durch zumindest zwei Stückgutinformationen bestimmt werden. Mit anderen Worten kann der Risikowert des Stückguts von zwei oder mehreren Stückgutinformationen abhängig sein. Jedoch können eine Vielzahl von Einflussfaktoren berücksichtigt werden, um eine genaue Einschätzung der Förderfähigkeit des Stückguts durchführen zu können. So können auch Kombinationen unterschiedlicher Stückgutinformationen zu einem kritischen Risikowert führen, wobei die jeweils einzelne und für sich genommene Stückgutinformation nicht zu dem kritischen Risikowert führen würde. Hierdurch kann eine besonders situationsgerechte Förderfähigkeit des Stückguts bereitgestellt werden.

Optional können zumindest einzelne Stückgutinformationen als dominant bestimmt werden. Unter dem Begriff dominant ist in diesem Zusammenhang zu verstehen, dass eine einzelne Stückgutinformation bereits hinreichend sein kann, um einen kritischen Risikowert bestimmen zu können. Mit anderen Worten kann gerade die dominante Stückgutinformation für einen kritischen Risikowert ausreichend sein, auch wenn eine Kombination anderer Risikowerte nicht zu dem kritischen Risikowert führen würde. Ein Stückgut kann eine dominante Stückinformation oder auch mehrere dominante Stückgutinformationen umfassen oder damit assoziiert sein. Dies bedeutet, dass im Rahmen des Verfahrens eine oder mehrere spezifische Informationen über das Stückgut, die aus der Bildinformation abgeleitet werden, als besonders relevant oder vorrangig eingestuft werden. Diese dominanten Stückgutinformationen können verschiedene Merkmale des Stückguts umfassen, wie beispielsweise Größe, Form, Gewicht, Oberflächenbeschaffenheit oder andere physische Eigenschaften, die für die Förderfähigkeit entscheidend sind. Die Bestimmung einer dominanten Stückgutinformation ermöglicht es, den Risikowert präziser zu berechnen, indem die wichtigsten Merkmale des Stückguts hervorgehoben und priorisiert werden.

Optional kann der Risikowert während der Handhabung veränderlich sein und/oder kontinuierlich für das Stückgut aktualisiert werden. Mit anderen Worten ist insbesondere der Risikowert kein feststehender Wert sein, sondern kann durch eine Aktualisierung der Stückgutinformation angepasst werden. Dadurch, dass sich beispielsweise ein Stückgut aus einem Fehlerzustand löst und wieder durch ein Förderband wie vorgesehen transportiert wird, könnte dies durch die beiliegenden Bildinformationen aufgenommen werden und zu einer Aktualisierung der Stückgutinformation führen. Ausgehend von dieser Veränderung kann sich die Bestimmung des Risikowerts abändern, sodass dieser nun nicht mehr in einem kritischen Bereich sondern in einem nicht-kritischen Bereich liegt. Dadurch kann eine reaktiver Systembereich hergestellt werden, welcher auf Veränderungen während der Handhabung reaktiv sein kann. Ebenso ist es auch möglich, dass der Risikowert eines Stückguts während der Handhabung sich derart verändert, um danach in dem kritischen Bereich zu liegen. Das kann bereits vorliegen, wenn ein Stückgut sich nicht entlang eines vorgeplanten Pfades bewegt. Oder wenn sich die Form des Stückguts während der Handhabung verändert. Dadurch kann eine besonders umfassende Bewertung der Förderfähigkeit des Stückguts bereitgestellt werden. Dies bedeutet, dass der Risikowert nicht statisch ist, sondern dynamisch angepasst wird, während das Stückgut von der Handhabungsvorrichtung bewegt wird. Der Risikowert ist ein Indikator für die Förderfähigkeit des Stückguts und wird auf Basis der Stückgutinformationen, die aus Bildinformationen abgeleitet werden, bestimmt.

Optional kann der Risikowert binär sein. Unter binär kann verstehen zu sein, dass der Risikowert entweder High, Low, 0 oder 1 ist. Dies bedeutet, dass der Risikowert nur zwei mögliche Zustände annehmen kann, typischerweise "förderfähig" oder "nicht förderfähig". Diese binäre Klassifizierung vereinfacht die Entscheidungsfindung erheblich, da sie eine klare und eindeutige Aussage über die Förderfähigkeit des Stückguts liefert. Dieses Merkmal kann den technischen Effekt liefern, dass der Risikowert unmittelbar und auf einfache Weise maschinenlesbar ist. Genauer gesagt kann somit direkt und ohne weitere Regeleinheit eine Lampe oder ein Warnton ausgegeben werden. Somit kann auf einfache und kostengünstige Art und Weise ein Bereich gekennzeichnet werden, in welchem sich ein Stückgut im nicht-förderfähigen Zustand befindet. Somit kann die Wiederherstellung der Förderfähigkeit des jeweiligen Stückguts beschleunigt werden.

Optional kann das Verfahren ferner den Schritt umfassen, wobei ein Vergleichen des Risikowerts mit dem Schwellenwert oder Arbeitswert durchgeführt werden kann. In diesem Kontext bezeichnet der Risikowert eine numerische oder qualitative Bewertung, die auf der Grundlage spezifischer Stückgutinformationen berechnet wird, welche aus Bildinformationen abgeleitet wurden. Diese Stückgutinformationen könnten beispielsweise die Größe, Form, Gewicht oder das Verhalten des Stückguts während des Transports umfassen. Der Schwellenwert oder Arbeitswert dient als Referenzpunkt, um zu entscheiden, ob das Stückgut förderfähig ist oder nicht. Der Vergleich des Risikowertes mit diesem Schwellenwert ermöglicht eine objektive und konsistente Entscheidung darüber, ob das Stückgut weiter transportiert werden kann oder aus dem Förderprozess ausgeschleust werden sollte. Mit anderen Worten kann ein Grenzwert bestimmt werden, zu welchem ein Risikowert als nicht kritisch und zu welchem ein Risikowert beim Erreichen und/oder Überschreiten dieses Grenzwerts als kritisch zu bewerten sein könnte. Dadurch kann eine einfache und schnelle Kennzeichnung eines Zustands in OK oder NOK ermöglicht werden.

Optional kann der Schwellenwert variabel sein. Mit anderen Worten kann der Schwellenwert während eines Betriebs eines Handhabungssystems angepasst werden. Es kann einen Ausgangsschwellenwert geben, mit dem bestimmt wird, wann ein Risikowert einen Wert annimmt, bei dem das entsprechende Stückgut nicht durch das Handhabungssystem gehandhabt werden kann. Es kann iterativ geprüft werden, ob eine Handhabung eines Stückgut problemlos funktioniert, wenn der Schwellenwert erhöht wird. Genauso kann geprüft werden, ob eine Handhabungsergebnis verbessert wird (z.B. erhöhte Geschwindigkeit und/oder erhöhter Durchsatz), wenn der Schwellenwert gesenkt wird. Somit kann während des Betriebs der Handhabungsvorrichtung geprüft werden, ob bessere Betriebsergebnisse erreicht werden, wenn der Schwellenwert angepasst wird. Somit kann das Verfahren beispielsweise an ein neues Stückgutspektrum angepasst werden.

Insgesamt kann dadurch ein Verfahren bereitgestellt werden, welches sich an wechselnde Randbedingungen anpassen kann.

Optional kann der Risikowert durch einen selbstlernenden Algorithmus bestimmt werden. Denkbar ist, dass ein Verfahren zum maschinellen Lernen umfasst ist, welches eine Vielzahl von Eingangsgröße (Stückgutinformation) verarbeitet und selbstlernend Gesetzmäßigkeiten zum Verarbeiten der Eingangsgrößen anpasst, um den Risikowert ausgeben zu können. Ein selbstlernender Algorithmus, oft auch als maschinelles Lernen bezeichnet, ist ein System, das aus Daten lernt und seine Leistung im Laufe der Zeit verbessert, ohne explizit programmiert zu werden. In diesem Kontext ermöglicht der selbstlernende Algorithmus eine dynamische Anpassung und Optimierung der Risikobewertung, indem er kontinuierlich aus den gesammelten Daten lernt und Muster oder Anomalien erkennt, die auf eine potenzielle Nicht-Förderfähigkeit hinweisen könnten. Dabei kann der Risikowert vom Zustand des maschinellen Lernens abhängen, wobei jeweils die gleiche Stückgutinformation zugeführt werden kann. Denkbar ist beispielsweise dass ein Risikowert durch eine Zuordnung mittels einer linearen Regression, basierend auf der Stückgutinformation erfolgen kann. Dadurch kann eine möglichst einfache Zuordnung stattfinden. Darüber hinaus können auch Deep-Learning-Algorithmen Teil des selbstlernenden Algorithmus sein. In anderen Worten können gerade neuronale Netze eine besonders einfache Methode darstellen, um einen einfachen und anpassbaren, selbstlernenden Algorithmus zur Bestimmung eines Risikowerts basierend auf einer Stückgutinformation bestimmen zu können.

Optional kann das Verfahren ferner einen zusätzlichen Schritt umfassen, wobei ein initialer Risikowert zu einem Stückgutwert zugeordnet werden kann. Der initiale Risikowert kann der Risikowert sein, den ein Stückgut initial besitzt. In anderen Worten kann der initiale Risikowert des Stückguts von initialen Stückgutinformationen abhängen. Dabei können die initialen Stückgutinformationen jene Stückgutinformationen sein, die einem Stückgut als erstes zugeordnet werden. Es kann dem Stückgut bereits der initialen Risikowert zugeordnet werden, sobald das Stückgut initial erfasst wurde. Das kann den Effekt liefern, dass das Stückgut möglichst früh im Handhabungsprozess ausgeschleust werden kann, sollte es nicht-förderfähig bewertet sein. Durch Veränderungen zukünftiger Stückgutinformationen kann der initiale Risikowert zu dem Risikowert werden. Durch die fortlaufende Aktualisierung des initialen Risikowerts zu dem Risikowert oder die Aktualisierung des Risikowerts an sich kann ein lernender Prozess bereitgestellt werden. Somit kann auf der Recheneinheit ein selbstlernender Algorithmus ausgeführt werden. Das kann zur Folge haben, dass die Varianz bei der Bestimmung des Risikowerts reduzierbar und damit ein Maß für die Förderfähigkeit des Stückguts anpassbar ist.

Optional kann das Verfahren einen zusätzlichen Schritt umfassen, wobei das Stückgut basierend auf dem Risikowert gehandhabt werden kann. Mit anderen Werten kann der Risikowert ein Schwellenwert sein, welcher ausschlaggebend dafür ist, ob das Stückgut auf der, insbesondere singulierten, Fördereinheit transportierbar ist, oder ob das Stückgut auf eine alternative Fördereinheit geschleust werden soll. Dies bedeutet, dass nachdem der Risikowert, der die Förderfähigkeit des Stückguts anzeigt, bestimmt wurde, das Stückgut entsprechend diesem Wert gehandhabt wird. Die Handhabung kann verschiedene Aktionen umfassen, wie zum Beispiel das Ausschleusen des Stückguts von der Förderstrecke, das Anpassen der Fördergeschwindigkeit oder das Umleiten des Stückguts auf eine alternative Route. Der Risikowert wird auf Basis der zuvor bestimmten Stückgutinformationen berechnet, die aus der Bildinformation des Stückguts abgeleitet werden. Diese Bildinformation wird erfasst, während das Stückgut von einer Handhabungsvorrichtung gehandhabt wird. Die spezifischen Kommunikationsmechanismen oder Mittel zur Interaktion zwischen den Komponenten umfassen dabei die Erfassung der Bildinformation durch Kamerasysteme, die Verarbeitung dieser Bildinformationen durch Algorithmen, die möglicherweise KI-basiert sind, und die anschließende Berechnung des Risikowerts durch ein zentrales System. Diese zentralen Systeme können die Informationen aus verschiedenen Quellen zusammenführen und daraus Entscheidungen ableiten.

Optional kann die Handhabungsvorrichtung eine Recheneinheit aufweisen, und wobei die Bildinformation und/oder die Stückgutinformation und/oder der Risikowert durch die Recheneinheit ermittelt oder bestimmt werden können. Die Recheneinheit kann einer Computereinheit entsprechen oder allgemeine Daten verarbeitende Einheit sein. Ferner kann die Recheneinheit der zuvor und weiter oben genannten Recheneinheit entsprechen. Die Recheneinheit kann ferner dazu ausgestaltet sein, zu veranlassen, ein Stückgut in Abhängigkeit von dessen Risikowert zu transportieren, auszuschleusen oder auf der alternativen Fördereinheit weiter zu transportieren. Die Recheneinheit kann dazu ausgestaltet sein, die Bildinformation als eingehende Größe aufzunehmen. Ferner kann die Recheneinheit dazu ausgestaltet sein, basierend auf der Bildinformation eine Stückgutinformation zu erzeugen. Darüber hinaus kann die Recheneinheit dazu ausgestaltet sein, einen Risikowert basierend auf einer Stückgutinformation zu erzeugen. Ferner kann die Recheneinheit dazu ausgestaltet sein den Risikowert als Ausgangsgröße auszugeben. Somit kann die Recheneinheit ein zentrales Element der Handhabungsvorrichtung sein. Darüber hinaus ist auch denkbar, dass die Recheneinheit Bestandteil eines Überwachungssystems ist, wobei das Überwachungssystem wiederum Teil der Handhabungsvorrichtung sein kann.

Optional kann die Handhabungsvorrichtung eine Datenbank aufweisen, und wobei die Recheneinheit mit der Datenbank kommunizieren kann. Dabei kann die Datenbank auch der weiter oben genannten Datenbank entsprechen. Die Datenbank kann als Speicher, insbesondere Datenspeicher, wie beispielsweise eine Festplatte, wie eine SSD oder HDD oder anderweitiges Speichermedium verstanden werden oder umfassen. Die Datenbank kann durch die Recheneinheit derart verändert oder manipuliert werden, sodass die Datenbank die Bildinformation und/oder Risikowert speichert, wobei diese Informationen dem, insbesondere individuellen, Stückgut zuordnungsbar sein können. Darüber hinaus kann die Recheneinheit dazu ausgestaltet sein, die Stückgutinformation aus der Datenbank zu laden, diese zu verändern, und zurück an die Datenbank zu übergeben. Gleiches kann auch für die Bildinformation und/oder den Risikowert analog durch die Recheneinheit erfolgen. Dadurch kann der technische Effekt erreicht werden, dass das Verfahren adaptiv auf geänderte reale Umstände reagieren kann. Optional können die Bildinformationen und/oder die Stückgutinformation und/oder der Risikowert durch die Recheneinheit in der Datenbank gespeichert und/oder verknüpft werden.

Optional kann das obige Verfahren für eine Vielzahl von Handhabungssystemen individuell angewendet werden. Damit kann für jedes Handhabungssystem ein eigener Risikowert entwickelt werden. Mit anderen Worten kann ein Stückgut bei einem Handhabungssystem keinerlei Probleme hervorrufen, während dasselbe Stückgut bei einem anderen Handhabungssystem mit erhöhter Wahrscheinlichkeit zu Problemen führen wird. Unterschiedliche Risikowerte (d.h. für eine Vielzahl von unterschiedlichen Handhabungsvorrichtungen) können auch lokal an einer Stelle in einer Handhabungskette eines Stückguts bestimmt werden. Damit kann bestimmt werden, wann das Stückgut ausgeschleust oder umgeleitet werden muss, um ein potentielle Problem beim Handhaben des Stückguts zu vermeiden. Bei den unterschiedlichen Risikowerten können beispielsweise unterschiedliche Stückgutinformationen berücksichtigt werden. Beispielsweise ist es bei einem Förderband unerheblich wie die äußere Beschaffenheit eine Stückguts ist, wohingegen bei einer Sauggreifvorrichtung dies eine wesentliche Eigenschaft ist. In dieser Hinsicht können unterschiedliche Schwellenwerte abhängig von der jeweiligen Handhabungsvorrichtung betratet werden. Damit kann das obige Verfahren auch beispielsweise bei einem Postzentrum mit einer Vielzahl von unterschiedlichen Handhabungsvorrichtungen angewendet werden.

Denkbar ist dabei, dass die Datenbank eine Vielzahl weiterer Datenbanken umfasst, wobei diese jeweiligen Datenbanken jeweils miteinander verknüpft sind. Als Schlüsselattribut zwischen der einen und der weiteren Datenbank kann die Identifikationskennzahl verwendet werden, die indikativ für das jeweilige Stückgut sein kann. Damit kann eine vielfältige und flexible Datenstruktur aufgebaut werden. Weiter kann damit eine besonders stabile Ausführung des Verfahrens durch die Recheneinheit ausgeführt werden.

Gemäß einem weiteren Aspekt der vorliegenden Offenbarung kann ein Computerprogramm bereitgestellt werden, das Anweisungen umfasst, die, wenn das Programm von einer Recheneinheit ausgeführt wird, die Recheneinheit dazu veranlasst, das Verfahren auszuführen. Mit anderen Worten kann das Computerprogramm auf der Recheneinheit ausgeführt werden. Somit kann das Computerprogramm alle Eigenschaften und Fähigkeiten erfüllen, die der Recheneinheit zugeordnet werden sofern das Computerprogramm auf der Recheneinheit ausgeführt wird.

Gemäß einem weiteren Aspekt der vorliegenden Offenbarung wird einer Handhabungsvorrichtung zum Bestimmen einer Förderfähigkeit eines Stückguts bereitgestellt. Die Handhabungsvorrichtung kann zumindest einen Förderer umfassen. Ferner kann die Handhabungsvorrichtung eine Bilderfassungsvorrichtung, insbesondere mehrere Kameras, mit einem Erfassungsraum zum Erfassen einer Bildinformation, umfassen. Die Handhabungsvorrichtung kann eine Recheneinheit umfassen. Die Recheneinheit kann dazu ausgestaltet sein, Stückgutinformationen auf Basis der Bildinformationen zu bestimmen. Die Recheneinheit kann ferner dazu ausgestaltet sein, den Risikowert auf Basis der Bildinformationen zu bestimmen. Die Handhabungsvorrichtung kann der weiter oben genannten Handhabungsvorrichtung entsprechen. Somit gilt das weiter oben gesagte bezüglich der Handhabungsvorrichtung auch für diese Handhabungsvorrichtung. Zumindest eine Fördereinheit kann eine Fördereinheit sein, die wiederum entweder ein Förderband oder ein Greifer sein kann. In anderen Worten kann der Handhabungsvorrichtung mehr als nur ein Förderer zugeordnet sein. Beispielsweise kann ein Förderband zur, insbesondere singulierten, Förderung eines oder mehrerer Stückgüter ausgestaltet sein, wobei ein zweites Förderband lediglich dazu ausgestaltet ist, nicht-förderfähige Stückgüter aus der Menge der Stückgüter, welche auf dem ersten Förderband befördert werden sollen, auszuschleusen. Dadurch kann ein automatischer und stabiler Prozess für förderfähige Stückgüter ermöglicht werden. Die Bilderfassungsvorrichtung kann Optional eine Vorrichtung sein, welche durch optische Erfassungsmittel Objekte wahrnehmen kann. Optional kann es sich bei diesen Objekten um die Stückgüter handeln. Genauer gesagt kann die Bilderfassungsvorrichtung eine Kamera sein. Dadurch können Bilder auf einfache Art und Weise erfasst werden. Denkbar ist auch, dass eine Vielzahl von Kameras Bestandteil der Bilderfassungsvorrichtung sind. Folglich kann die Bildinformation unterschiedliche Bildformate umfassen. Das kann den Effekt liefern, dass ein Bildformat abgebildet werden kann, welches das Bildformat einer einzelnen Kamera überschreitet. Mit anderen Worten kann der Erfassungsraum, welcher durch einen Sichtwinkel einer Kamera definiert werden kann durch eine Vielzahl von Kameras erweitert werden. Die Recheneinheit kann der weiter oben genannten und ausgeführten Recheneinheit entsprechen. Die Bildinformation der Kamera oder mehrerer Kameras können der Recheneinheit zugeführt werden, wobei die Recheneinheit dazu ausgestaltet ist, aus dieser Bildinformation die Stückgutinformation abzuleiten oder zu bestimmen. Als konsekutiv nächsten Schritt kann die Recheneinheit dazu ausgestaltet sein, den Risikowert, ausgehend von der Stückgutinformation, zu bestimmen.

Optional kann der Förderer zumindest abschnittsweise, insbesondere vollständig, in dem Erfassungsraum der Bilderfassungsvorrichtung enthalten sein. Mit anderen Worten kann der Erfassungsraum, welcher durch die Kamera oder durch mehrere Kameras bestimmt werden kann, derartig ausgestaltet sein, dass dieser ein Format aufweist, welches gerade derart ausgestaltet ist, um die gesamte Erstreckung des Förderers darin aufzunehmen und/oder abzubilden. Das kann den Effekt einer besonders schnellen und effizienten Bestimmung der Stückgutinformation liefern, wobei die Gesamtheit des Förderers und die darauf befindlichen Stückgüter berücksichtigt werden können.

Optional kann die zumindest eine Kamera mit der Recheneinheit kommunizieren. Dadurch kann ein Datenaustausch zwischen der einen oder zwischen mehreren Kameras und der Recheneinheit bereitgestellt werden. Mit anderen Worten kann die Kamera oder die Kameras Bilder oder Bilddatenströme über eine gemeinsame Schnittstelle mit der Recheneinheit austauschen oder an diese übermitteln. Dadurch können Stückgutinformationen mittelbar durch die Kameras erfasst werden, in denen die Bildinformation bereitgestellt wird.

Einzelne Merkmale und Ausführungsformen können mit anderen Merkmalen und Ausführungsformen kombiniert werden und so neue Ausführungsformen bilden. Ausgestaltungen und Vorteile der Ausführungsformen und Merkmale gelten auch für die neuen Ausführungsformen und Merkmale und anders herum. Insbesondere können alle Vorteile und Merkmale des Verfahrens zum Bestimmen einer Förderfähigkeit eines Stückguts und des Computerprogramms analog auf die Handhabungsvorrichtung zur Bestimmung der Förderfähigkeit übertragen werden und umgekehrt.

Weitere Ausgestaltungen und weitere Merkmale ergeben sich aus der nachfolgenden Beschreibung mit Bezug auf die Figuren. Einzelne in den gezeigten Ausführungsformen offenbarte Merkmale können auch in die anderen Ausführungsformen eingesetzt werden, sofern dies nicht ausdrücklich ausgeschlossen wurde. Es zeigen:
- **Fig. 1**: ein schematisches Ablaufdiagramms eines Verfahrens zur Bestimmung der Förderfähigkeit eines Stückguts gemäß einer Ausführungsform der vorliegenden Offenbarung, und
- **Fig. 2**: eine schematische Darstellung einer Handhabungsvorrichtung zum Handhaben eines Stückguts gemäß einer Ausführungsform der vorliegenden Offenbarung.

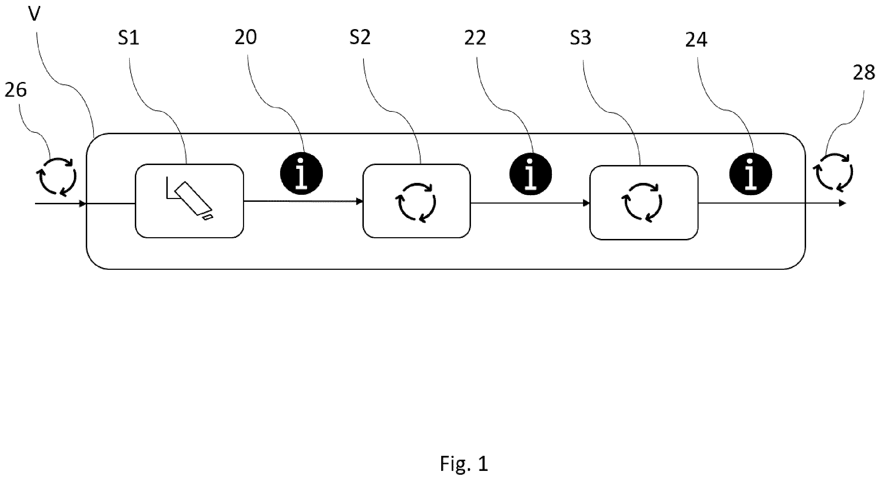

Die **Fig. 1** zeigt ein schematische Ablaufdiagramm, das Verfahrensschritte zur Bestimmung einer Förderfähigkeit eines Stückguts 2 gemäß einer Ausführungsform der vorliegenden Offenbarung. Das Verfahren V, wie es in dem Ablaufdiagramm dargestellt ist, kann auf einer Handhabungsvorrichtung 1 oder im Zusammenhang mit einer Handhabungsvorrichtung 1 ausführbar sein. Diese Handhabungsvorrichtung 1 kann wiederum Teil eines Logistik-Netzwerks sein oder eine Logistik-Netzwerk ausbilden. Darüber hinaus kann das dargestellte Verfahren V auf oder durch eine Recheneinheit 14 ausgeführt werden, wobei die Recheneinheit 14 Teil Handhabungsvorrichtung oder des Logistik-Netzwerks sein kann. Durch die Handhabungsvorrichtung 1, welche eine Fördereinheit sein oder umfassen kann, kann ein Stückgut 2 beispielsweise in seiner Pose (Position und Orientierung) manipuliert werden. Mit anderen Worten kann eine Zustandsänderung des Stückguts 2 durch die Handhabungsvorrichtung 1 erfolgen. Der Schritt der Handhabung eines Stückguts 26 kann Teil des Verfahrens V sein oder vor und/oder während und/oder nach dem Verfahren V ausgeführt werden. Ziel dieses Verfahrens V ist es, eine automatische Bestimmung für die Förderfähigkeit des Stückguts 2 zu bestimmen. Gerade dadurch können sowohl ein förderfähiges, als auch ein nicht-förderfähiges Stückgut 2 erkannt und durch eine alternative und/oder umstandsgerechte Handhabung weitertransportiert werden. In einem ersten Schritt S1 erfolgt das Erlangen oder Erfassen einer Bildinformation 20 des Stückguts 2 während es von der Handhabungsvorrichtung 1 gehandhabt wird. Dieser Schritt S1 kann im Zusammenhang mit einer Bilderfassungsvorrichtung 6 ausgeführt werden, wobei die Bilderfassungsvorrichtung 6 zumindest eine Kamera 8 umfasst oder damit kommuniziert. Die von der Bilderfassungsvorrichtung 6 aufgenommenen Bilder oder der aufgenommene Bilddatenstrom kann anschließend durch die Recheneinheit 14 zu der Bildinformation 20 umgewandelt, überführt oder ausgewertet werden. In dem weiteren, insbesondere konsekutiv nächsten, Schritt S2 wird eine Stückgutinformation 22 basierend auf der Bildinformation 20 bestimmt. Mit anderen Worten kann die Recheneinheit 14 die Bildinformation 20 zur Stückgutinformation 22 interpretieren. Beispielsweise kann hierfür ein Machine-Vision-Verfahren eingesetzt werden. Die Stückgutinformation 22 kann dabei indikativ für einen Zustand des Stückguts 2 sein. Das Stückgut 2 kann eine Vielzahl von Stückgutinformationen 22 aufweisen oder dem Stückgut 2 zugeordnet sein. Mit anderen Worten kann die Stückgutinformation 22 ein digitales Abbild des Stückguts 2 sein, welches von der Handhabungsvorrichtung 1 gehandhabt wird. Die Stückgutinformation 22 oder die mehreren Stückgutinformationen 22 eines Stückguts 2 können auch als Digitaler Zwilling aufgefasst werden oder Bestandteil davon sein. Die Recheneinheit 14 kann ferner dazu ausgestaltet sein, den dritten Schritt S3 auszuführen, wobei ein Risikowert 24 auf Basis der Stückgutinformation 22 bestimmt wird, wobei der Risikowert 24 indikativ für die Förderfähigkeit des Stückguts 2 ist. Der Risikowert 24 kann mit anderen Worten von der Stückgutinformation 22 abhängig sein, welche einem Stückgut 2 zugeordnet ist. Ferner kann der Risikowert 24 eine Art Entscheidungsgröße sein, sodass die Handhabungseinheit 1 in Abhängigkeit von dem Risikowert 24 dazu veranlasst oder gesteuert werden kann, das Stückgut 2 zu handhaben. Dabei kann das Stückgut 2 beispielsweise beim Überschreiten eines Schwellen- oder Grenzwerts durch den Risikowert 24 aus der Fördereinheit ausgeschleust oder auf einer alternativen und/oder umstandsgerechten Fördereinheit weitertransportiert werden. Die Förderfähigkeit 28 eines Stückguts kann das Ergebnis des Verfahrens V sein oder als Ergebnis durch das Verfahren V für mögliche weitere nachgelagerte Schritte nutzbar gemacht werden. Die Bildinformation 20 sowie die Stückgutinformation 22 können insbesondere aktualisiert werden. Dadurch kann es auch dazu kommen, dass sich der Risikowert 24 während der Handhabung des Stückguts 2 verändert und/oder ein lernendes System bereitgestellt wird.

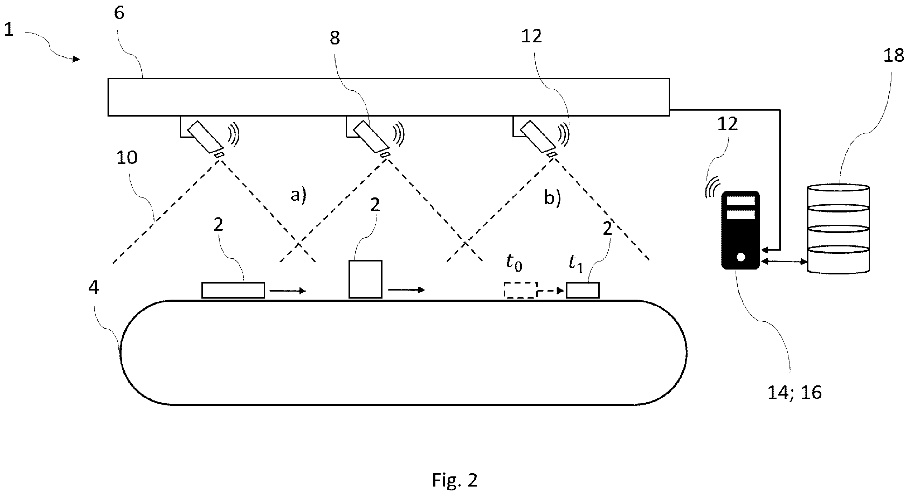

Die **Fig. 2** zeigt eine schematische Darstellung einer Handhabungsvorrichtung 1 zum Handhaben eines Stückguts 2 gemäß einer Ausführungsform der vorliegenden Offenbarung. Die Handhabungsvorrichtung 1, welche Teil eines Logistik-Netzwerks sein kann oder dieses zumindest teilweise ausbilden kann, umfasst eine Fördereinheit oder auch Förderer 4 genannt. Durch den Förderer 4 kann ein Stückgut 2 oder mehrere Stückgüter 2 über einen Zeitraum hinweg verlagert, insbesondere deren Pose verändert, werden. In einem Betriebszustand oberhalb des Förderers 4, denkbarerweise auch an der Decke eines Gebäudes, ist eine Bilderfassungsvorrichtung 6 angeordnet. Damit kann der Förderer 4 in einem Sichtbereich der Bilderfassungsvorrichtung 6 angeordnet sein. Die Bilderfassungseinrichtung 6 weist gemäß der Ausführungsform der Fig. 2 mehrere Kameras 8 auf. Eine jede dieser Kamera 8 hat einen Erfassungsraum 10. Darunter ist insbesondere der abbildbare Bildbereich der Kamera 8 verständlich. Wie in Fig. 2 gezeigt, können sich die Erfassungsräume 10 benachbarter Kameras 8 überschneiden. Dadurch kann es ermöglicht werden, dass einzelne Bilder unterschiedlicher Kameras 10 zu einer Bilddatei, also ein gesamtes Bild, zusammengeführt werden können. Beispielsweise kann eine Recheneinheit 14 dazu ausgestaltet sein, mittels eines Rektifizierungsschritts Verzerrungen durch unterschiedliche Blickwinkel der Kameras zu kompensieren, sodass ein maßstabsgetreues Gesamtbild bereitgestellt werden kann. Dadurch kann eine exakte Bestimmung einer Stückgutinformation 22 basierend auf einer Bildinformation 20 bereitgestellt werden. Die Recheneinheit 14 kann insbesondere von einem Computerprogramm 16 zur Ausführung dieses und weiterer Operationen veranlasst werden. Die Recheneinheit 14 kann dazu ausgestaltet sein, mit der Bilderfassungsvorrichtung 14, insbesondere der/den Kamera/s zu kommunizieren. In der in Fig. 2 dargestellten Ausführungsform ist diese Kommunikation durch eine drahtlose Informationsübertragungsschnittstelle 12 dargestellt. Denkbar ist auch, dass die Kommunikation kabelgebunden erfolgen kann. An der Recheneinheit 14 ist eine Datenbank 18 angeordnet. Die Datenbank 18 kann auch Bestandteil der Recheneinheit 14 sein. Denkbar ist auch, dass die Datenbank 18 cloudbasiert sein kann. Dadurch kann ein flexibler Zugriff auf die Datenbank 18 ermöglicht werden. Dadurch, dass die Recheneinheit 14 insbesondere dazu ausgestaltet ist, mit der Datenbank 18 zu kommunizieren, können in der Datenbank gespeicherte Informationen von der Recheneinheit 14 bezogen sowie durch die Recheneinheit in der Datenbank 18 gespeichert werden. Dabei ist es auch möglich, dass bereits in der Datenbank 18 enthaltene Informationen, wie beispielsweise eine Bildinformation 20, Stückgutinformation 22 oder ein Risikowert 24, insbesondere durch neue Informationen ersetzt oder aktualisiert werden. Ferner zeigt Fig. 2 unter der Kennzeichnung a) eine Darstellung zweier unterschiedlicher singulierter Stückgüter 2. Somit können gerade, insbesondere geometrisch, unterschiedliche ausgestaltete Stückgüter 2 durch den Förderer 4 transportiert werden, wobei sich die unterschiedlichen Stückgüter 2 innerhalb des Erfassungsraums 10 befinden. Durch die Kennzeichnung b) ist ein Bewegungsprozess eines Stückguts 2 zu einem Zeitpunkt t₀ und einem Zeitpunkt t₁ gezeigt, wobei sich die Position des Stückguts an den beiden Zeitpunkten unterscheidet. Dabei befindet sich das Stückgut 2 in beiden Zeitpunkten jeweils innerhalb des Erfassungsraums 10. Die durch die Kamera 8 erfasste Bildinformation 20 des Stückguts 2 zum Zeitpunkt t₀ kann dabei an die Recheneinheit 14 übertragen werden. Die Recheneinheit 14 ist insbesondere dazu ausgestaltet, diese Bildinformation 20 in der Datenbank 18 zu speichern und ferner basieren auf der Bildinformation 20 die entsprechende Stückgutinformation 22 zu bestimmen und auch diese in der Datenbank 18 zu speichern. Ferner kann die Recheneinheit 14 dazu ausgestaltet sein, basierend auf der bestimmten Stückgutinformation 22, den Risikowert 24 zu bestimmen und auch diesen in der Datenbank 18 zu speichern. Zum Zeitpunkt t₁ können diese genannten Schritte wiederholt werden, sodass die in der Datenbank 18 gespeicherten und mit dem Stückgut 2 assoziierten Informationen aktualisiert oder geändert werden können.

### Bezugszeichenliste:

- 1: Handhabungsvorrichtung
- 2: Stückgut
- 4: Förderer
- 6: Bilderfassungsvorrichtung
- 8: Kamera
- 10: Erfassungsraum
- 12: Informationsübertragungsschnittstelle
- 14: Recheneinheit
- 16: Computerprogramm
- 18: Datenbank
- 20: Bildinformation
- 22: Stückgutinformation
- 24: Risikowert
- 26: Handhabung
- 28: Förderfähigkeit
- S1: Erlangen oder Erfassen einer Bildinformation
- S2: Bestimmen einer Stückgutinformation
- S3: Bestimmen eines Risikowerts
- V: Computerimplementierte Verfahren

## Patentansprüche

1. Computerimplementiertes Verfahren (V) zum Bestimmen einer Förderfähigkeit eines Stückguts (2), umfassend die Schritte:
- Erlangen oder Erfassen einer Bildinformation (S1) eines Stückguts (2) während es von einer Handhabungsvorrichtung (1) gehandhabt wird,
- Bestimmen einer Stückgutinformation (S2) auf Basis der Bildinformation (20),
- Bestimmen eines Risikowerts (S3) auf Basis der Stückgutinformation (22), wobei der Risikowert (24) indikativ für die Förderfähigkeit des Stückguts (2) ist.

2. Verfahren (V) gemäß Anspruch 1, wobei das Erlangen oder Erfassen (S1) einer Bildinformation (S1) ein a-priori Stitching von einzelnen Bildern umfasst.

3. Verfahren (V) gemäß einem der vorhergehenden Ansprüche, wobei die Bildinformation (20) für zumindest zwei unterschiedliche Zeitpunkten indikativ ist.

4. Verfahren (V) gemäß einem der vorhergehenden Ansprüche, wobei die Bildinformation (20) kontinuierlich erlangt oder erfasst wird.

5. Verfahren (V) gemäß einem der vorhergehenden Ansprüche, wobei das Verfahren ferner den Schritt umfasst:
Identifikation des Stückguts (2) auf Basis der Bildinformation (20), wobei die Bestimmung des Risikowerts (24) zusätzlich basierend auf der Identifikation ausgeführt wird.

6. Verfahren (V) gemäß einem der vorhergehenden Ansprüche, wobei die Stückgutinformation (22) umfasst:
- einen Zeitstempel,
- Positionsdaten des Stückguts (2),
- eine Größe des Stückguts (2),
- ein Gewicht des Stückguts (2),
- eine Stückgutklasse,
- einen Abstand des Stückguts (2) zu einem nächsten Stückgut (2),
- eine Veränderung der Handhabungsreihenfolge des Stückguts (2), und/oder
- eine Veränderung von Positionsdaten des Stückguts (2).

7. Verfahren (V) gemäß einem der vorhergehenden Ansprüche, wobei die Stückgutinformation (22) durch ein Machine-Vision-Verfahren bestimmt wird.

8. Verfahren (V) gemäß einem der vorhergehenden Ansprüche, wobei die Stückgutinformation (22) zusätzlichen auf Basis einer Sensorinformation bestimmt wird.

9. Verfahren (V) gemäß einem der vorhergehenden Ansprüche, wobei der Risikowert (24) individuell für das Stückgut (2) bestimmt wird.

10. Verfahren (V) gemäß einem der vorhergehenden Ansprüche, wobei der Risikowert (24) während der Handhabung veränderlich ist und/oder kontinuierlich für das Stückgut (2) aktualisiert wird.

11. Verfahren (V) gemäß einem der vorhergehenden Ansprüche, wobei das Verfahren (V) ferner umfasst:
Vergleichen des Risikowertes (24) mit einem Schwellenwert oder Arbeitswert.

12. Verfahren (V) gemäß einem der vorhergehenden Ansprüche, wobei der Risikowert (24) durch einen selbstlernenden Algorithmus bestimmt wird.

13. Verfahren (V) gemäß einem der vorhergehenden Ansprüche, wobei das Verfahren ferner umfasst:
Zuordnen eines initialen Risikowerts (24) zu dem Stückgut (2).

14. Verfahren (V) gemäß einem der vorhergehenden Ansprüche, wobei das Verfahren (V) ferner den Schritt umfasst:
Handhaben des Stückguts (2) basierend auf dem Risikowert (24).

15. Handhabungsvorrichtung (1) zum Bestimmen einer Förderfähigkeit eines Stückguts (2), umfassend:
zumindest eine Handhabungsvorrichtung (4), die dazu ausgestaltet ist, ein Stückgut zu handhaben,
eine Bilderfassungsvorrichtung (6), insbesondere mehrere Kameras (8), mit einem Erfassungsraum (10) zum Erfassen einer Bildinformation (20),
eine Recheneinheit (14),
wobei die Recheneinheit (14) dazu ausgestaltet ist, Stückgutinformationen (22) auf Basis der Bildinformationen (20) zu bestimmen,
wobei die Recheneinheit (14) ferner dazu ausgestaltet ist, den Risikowert (24) auf Basis der Bildinformation (20) zu bestimmen.
